# EUROPEAN PATENT SPECIFICATION

(11) **EP 3 231 165 B1**
(45) Date of publication and mention of the grant of the patent: **13.02.2019**
(21) Application number: 15813501.2
(22) Date of filing: 11.12.2015
(51) Int. Cl.: H04M 3/02

(54) **TELEPHONE CALL PROCESSING**
TELEFONANRUFVERARBEITUNG
TRAITEMENT D'APPELS TÉLÉPHONIQUES

(30) Priority: 11.12.2014 GB 201422064
(43) Date of publication of application: 18.10.2017
(73) Proprietor: Ultra Communications Ltd., Fareham, Hampshire PO16 8UT (GB)
(72) Inventor: SHILLING, Craig, Fareham Hampshire PO16 8UT (GB); DAVIES, Tom, Fareham Hampshire PO16 8UT (GB); SULLIVAN, Darren, Fareham Hampshire PO16 8UT (GB); SUMNER, James, Fareham Hampshire PO16 8UT (GB); WRAY, Robert, Fareham Hampshire PO16 8UT (GB); BATES, Robert, Fareham Hampshire PO16 8UT (GB)
(74) Representative: Boult Wade Tennant LLP
(86) International application number: PCT/GB2015/053808
(87) International publication number: WO 2016/092320

(56) References cited:
- US-A- 5 371 787
- US-A- 5 581 602
- US-A1- 2014 334 612

## Description

### Field of the Invention

The present invention relates to a method and system for processing telephone calls and in particular determining whether a person or machine has answered a call.

### Background of the Invention

When calling a telephone number, it is usually the intention of the caller to be connected to a live person. However, telephone systems including cellular networks and wired systems, commonly include voicemail and other automated answering systems. These automated answering systems may accept the call when the live person is unavailable, already engaged in another call or perhaps has their handset (e.g. mobile telephone) turned off. Having a call answered by an automated system may be acceptable in person-to-person calls but this can be problematic in other scenarios, especially within call centre operations that employ automatic calling systems. Such call centres may be involved in telemarketing, customer relationship management and debt collection campaigns, for example. In such systems, calls may be set up automatically and on connection they are transferred to a call centre staff member or agent. Reducing the occurrence of call centre agents entering into calls that involve an automated answering system or other machine is important for improving call centre productivity.

US 7,680,260 describes a system for detecting the occurrence of a voicemail system answering a call. This system measures the time interval between when a call is transmitted to a mobile switching centre and when an indication is received that the call has been answered. If this time interval is no greater than a threshold then the call is ended (i.e. assumed to be an answer system).

However, calls between different systems may differ in the actual connection time and so calls that take longer to connect but are answered by an answering machine may be allowed to continue erroneously in the system of US 7,680,260. Furthermore, calls to live persons may also be disconnected incorrectly in situations where the call is connected particularly quickly (i.e. within the time threshold). This can cause inconvenience to the called party, a loss of productivity and may also be against local telecommunications regulations.

Therefore, there is required a method and system that more accurately discriminates between live callers and automated answering processes.

US 5,581,602 describes measuring the duration of a noise signal and sound level signal, and if the noise level signal is followed by a sound level signal, or if the sound level signal duration exceeds a predetermined duration, then determining that a call has been answered by an answering machine.

### Summary of the Invention

When a call is placed, various signals may pass over the line. These signals can be used to monitor the progress of the call and events that take place. Different telecommunications systems use different forms and standards for these signals.

The events that take place (and can be signalled over the line or connection) include: call setup, call 30 proceeding, call alerting (e.g. early media signalling or ringing), and call connected.

When the call is connected at a particular point or time in the process then this can indicate that either a live person or not (e.g. an answering machine, IVR process, or other machine) has answered and been connected to the call.

If the call is answered before the call alerting event occurs then this is interpreted as a non-human answering condition. This can occur because the machine, computer or internal process that answers the call does not need to wait for a call alerting event or signal before detecting a call.

Similarly, a call being answered very soon after the call alerting event can also indicate that a machine (or non-human process) has answered.

Either of these scenarios may be used separately or in combination.

"Very soon after" can be a time period, predetermined or configurable time interval. For example, this can be any time from the call alerting event (time zero) onwards (e.g. 0-50ms, 0-100ms, 0-500ms, 0-1s, etc.) Shorter time intervals can be used to reduce the occurrence of disconnecting live recipients. Longer time intervals can be used to reduce the occurrence of connecting to non-humans. The time interval may also be dynamically set based on historic or live results. For example, as the number or frequency (per call or over time) of non-human connections increases then the time interval can be increased to lower the number or frequency. The time interval may also be dynamically reduced as reports of disconnections to live recipients increase.

The system and method may operate in real time on current calls or be used to analyse historic or stored data. For example, calls may be analysed to determine what particular interval (after the call alert) to set in order to discriminate live from non-live called parties. For example, this may be set so that a certain percentage of calls to live people are not disconnected (e.g. 99%, 99.9%, 99.99%, 99.999%, etc.)

A telephone call may include voice only calls, video calls or other types of communication or where a communication event is set up between devices or two or more parties.

According to a first aspect there is provided a method as described in claim 1. The call alert is for example, a signal that indicates that the remote or called party or recipient communication device has been alerted to the call. This could be a ringing signal or similar.

According to a second aspect there is provided a method as described in claim 2.

The first and second aspects may be combined or used separately and have advantages over the prior art.

According to an example there is provided a method of processing a telephone call comprising the steps of:
initiating a telephone call;
taking a first action if the telephone call is answered before a call alert is initiated or if the telephone call is answered within a time period following the call alert being initiated; and
taking a second action if the telephone call is answered after expiry of the time period following the call alert being initiated.

Therefore, the methods may have different outcomes or actions depending on the point or time that the call was answered. The actions may be to disconnect or allow the call to continue or be different actions, for example. The first action could also to allow the call to proceed but direct it to an automatic process. For example, this could be to leave a message or enter an IVR process (e.g. press a key to be put through to a live agent).

The first action may be to make one decision about call routing or processing and the second action may be a different decision about call routing or processing.

Optionally, the first action may be terminating the call and the second action is allowing the call to proceed. Therefore, calls to non-humans (machines) may be avoided improving efficiency of a call centre or telecommunications network.

Optionally, the first action may be determining that the call has been answered by a non-human and the second action is determining that the call has been answered by a human. This information may be used by further processes. For example, the call may be allowed to continue but not be directed immediately to a live agent. This can be useful when an IVR system is encountered and handled automatically.

Advantageously, the non-human may be an answering machine, voicemail, digital assistant, artificial intelligence, a computer, machine, or an interactive voice response, IVR, processor or other device.

Preferably, the method may further comprise the step of receiving a signal indicating that the call alert has been sent. This signal may be sent according to a telecommunications standard, for example. This signal therefore provides an indication of the call alert event.

Optionally, the method may further comprise the steps of:
receiving a signal indicating that the call has been set up; and
receiving a signal indicating that the call is proceeding. Therefore, the decision may not be made (or the method started) until either or both of these signals are received.

Optionally, the call alert may be a ringing telephone or early media signalling. Other call alerts may be encountered and detected. This may be any type of audio, for example.

Preferably, the method may further comprise the steps of determining that the telephone call has been answered, and determining that the call alert is initiated, based on call progress signalling events.

Optionally, the first action may be to allow the call to proceed provided one or more criteria are met. In other words, additional safeguards or rules may be in place to prevent desirable calls from being lost.

Optionally, the one or more criteria may be any one or more of:
determining that a previous telephone call to the same number was successful;
determining that the telephone call is the first time that the telephone number has been called;
determining that a previous telephone call to the same number exceeded a predetermined time; (e.g. it should have resulted in a conversation with a person. Shorter calls may indicate a non-human answer); and/or
determining that a previous telephone call to the same number was connected to an IVR processor. In other words, the history (or lack) of the called party may be considered when a decision to disconnect is taken. For example, some establishments always automatically answer all incoming calls but these should not necessarily be terminated. The history of these particular numbers can then be considered during future calls. Successful may be defined as a previous call being classified (by a previous agent) as useful, or being able to speak to a person.

Optionally, the telephone call may be initiated using voice over IP, VoIP, or integrated services digital network, ISDN protocols. Other telephone calling technology may be used such as session initiation protocol (SIP) and primary rate interface (PRI), for example.

According to an example there is provided a method of analysing telephone call data comprising the step of:
determining from telephone call data that a telephone call was answered by a non-human if the telephone call data indicates that the telephone call was answered before a call alert was initiated.

According to an example there is provided a method of analysing telephone call data comprising the step of:
determining from telephone call data that a telephone call was answered by a non-human if the telephone call data indicates that the telephone call was answered within a time period (e.g. specific or predetermined time period) following a call alert being initiated.

According to an example there is provided a method of analysing telephone call data comprising the step of:
determining from telephone call data that a telephone call was answered by a non-human if the telephone call was answered before a call alert was initiated or if the telephone call was answered within a time period (e.g. specific or predetermined time period) following the call alert being initiated.

The examples may therefore operate on historic or stored data. Therefore, the accuracy or effectiveness of the system may be determined and parameters set (e.g. setting the time period or threshold to be used in the examples - time period after the call alert is initiated). Particular telephone numbers may also be purged or removed from future calls based on this analysis (e.g. if non-human answering is detected or above a predetermined frequency). This analysis may also be used to determine and prove that telecommunications regulations are being adhered to (e.g. minimising or reducing calls that are disconnected erroneously or when a human answers a call). Therefore, this may avoid the need to manually analyse voice calls. Non-humans may be any automated process or machine described throughout this disclosure.

Following the determination being made (that a human or non-human answered the call) then further actions, analysis or processing may take place. This analysis may be used to improve the call routing or processing of live calls.

According to a third aspect there is provided a system as described in claim 1.

According to a fourth aspect there is provided a system as described in claim 12.

According to an example there is provided a system comprising a processor configured to:
initiate a telephone call;
take a first action if the telephone call is answered before a call alert is initiated or if the telephone call is answered within a time period following the call alert being initiated; and
take a second action if the telephone call is answered after expiry of the time period following the call alert being initiated.

Advantageously, the system may further comprise a telephone interface or other components configured to initiate the telephone call.

According to a further aspect there is provided a call centre comprising the systems of any of aspects seven to nine.

The methods described above may be implemented as a computer program comprising program instructions to operate a computer. The computer program may be stored on a computer-readable medium.

The computer system may include a processor such as a central processing unit (CPU). The processor may execute logic in the form of a software program. The computer system may include a memory including volatile and non-volatile storage medium. A computer-readable medium may be included to store the logic or program instructions. The different parts of the system may be connected using a network (e.g. wireless networks and wired networks). The computer system may include one or more interfaces. The computer system may contain a suitable operating system such as UNIX, Windows (RTM) or Linux, for example.

It should be noted that any feature described above may be used with any particular aspect or embodiment of the invention.

### Brief description of the Figures

The present invention may be put into practice in a number of ways and embodiments will now be described by way of example only and with reference to the accompanying drawings, in which:
FIG. 1 shows a schematic diagram of a call centre including automated calling equipment;
FIG. 2 shows a schematic diagram of a timeline of events occurring during a call;
FIG. 3 shows a schematic diagram of a method for processing a call using the call centre of figure 1, given by way of example only;
FIG. 4 shows a schematic diagram of the automated calling equipment of figure 1;
FIG. 5 shows a schematic diagram of a system for analysing telephone call data generated within the call centre of figure 1;
FIG. 6 shows a flowchart of a method of processing a telephone call;
FIG. 7 shows a flowchart of an alternative method for processing a telephone call; and
FIG. 8 shows a flowchart of a further method for processing a telephone call given by way of example only.

It should be noted that the figures are illustrated for simplicity and are not necessarily drawn to scale. Like features are provided with the same reference numerals.

### Detailed description of the preferred embodiments

In an embodiment, a call to a communications device over the public telephone network is established. A series of call progress signalling events may be employed by the network and attached communications devices to facilitate the proper handling of the call. Based on a temporal sequence analysis of network call progress signalling events, a determination can be made of whether the recipient is a live person or an answering machine (or other automated process).

When a call to a communications device over the public telephone network is setup, a series of call progress signalling events may be employed by the network and attached communications devices in accordance with standard call establishment protocols (including but not limited to those specified by the Session Initiation Protocol (SIP) IETF RFC 3261 and Q931 ITU standards). The call progress signalling events can indicate availability or otherwise of network service facilities and the current state of a call as it traverses the network. The call progress signalling events can indicate if the call setup is proceeding; if early media such as audible network messages and in some cases audible ring back tone is available; if the recipient communications device has been alerted to the presence of an incoming call; if the call has been answered; and/or if the call has disconnected.

Answering machines (which in this description may be any automated process or call answering process) may be activated by recipient communications devices after a period of alerting has expired or if the communications device is otherwise immediately unavailable to process an incoming call. An answering machine activated due to a communications device being immediately unavailable will typically answer immediately after a call progress signalling event indicating that the call setup is proceeding or otherwise, or within a short period after one or more subsequent call progress signalling events indicating that the recipient communications device has been alerted to the presence of an incoming call.

The following describes a method of handling call progress signalling events that can determine whether the recipient is a live person or a machine.

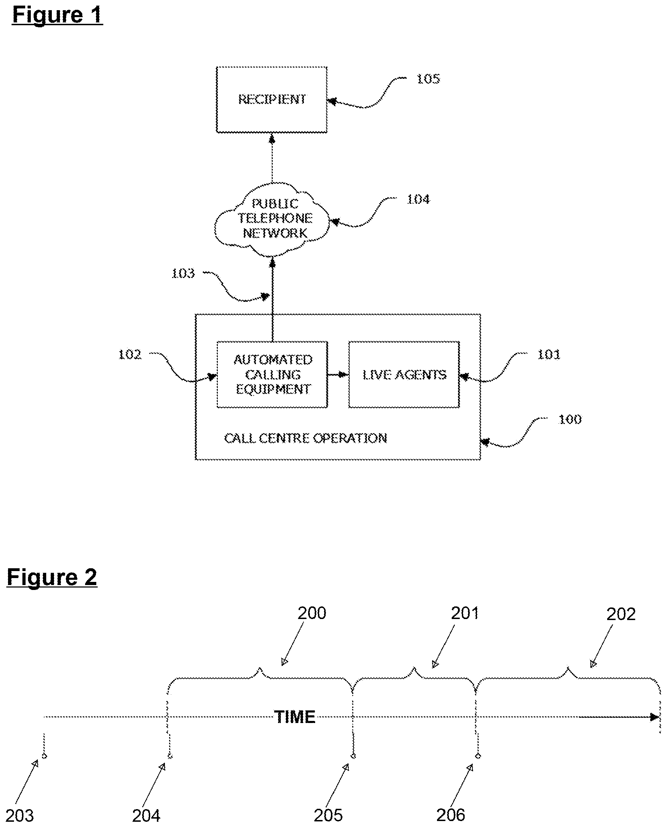

Figure 1 shows a schematic illustration of an example call centre operation **100** using an automated calling system **102** to establish calls **103** over the public telephone network **104** on behalf of live agents **101** to recipient communications devices **105.**

Figure 2 shows a timeline showing a temporal sequence of events associated with establishing a call over the public telephone network comprising call progress signalling events **203, 204, 205,** time intervals **200, 201, 202** pertinent to the method and a configurable threshold **206** which defines the period within which an answered call can be determined to be connected to a machine.

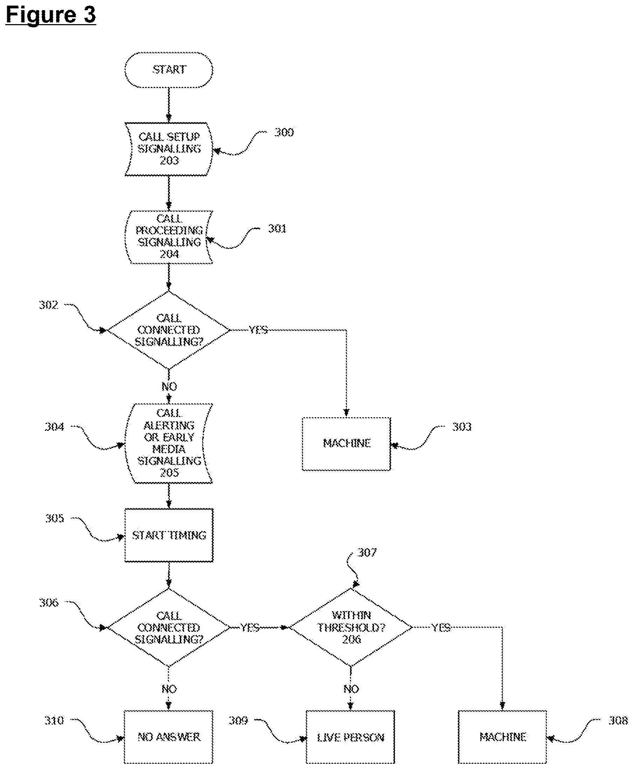

Figure 3 shows a flowchart the method to make a determination of whether a call has been answered by a live person or a machine.

Figure 1 shows a simplified illustration of an example contact centre operation **100** and represents the business process of establishing calls **103** over the public network **104** to a recipient communications device **105** on behalf of live call centre agents **101.** Amongst other processes, the contact centre operation **100** establishes calls resulting in a successful connection to either a live person or an answering machine. All other call outcomes are not relevant to this disclosure. The process is expanded specifically with regard to the pertinent call progress signalling events described with reference to figures 2 and 3. Figure 2 represents the temporal sequence of events and time intervals inherent to the process while Figure 3 defines the an example process flow.
1. A call **103, 203, 300,** is initiated by the automatic calling system **102** in accordance with the protocol employed by the local network service provider. A call progress signalling event **204, 301** is received indicating that the call setup is proceeding.
   a. If a call progress signalling event is received indicating that the call has been answered **302** within the subsequent period **200** (i.e. before the call alert) then a determination is made that the call has been answered by a machine **303** or other non-human or process.
   b. If a call progress signalling event is received indicating that the recipient communications device has been alerted to the presence of an incoming call; or that early media such as network messages or ring back tone is available **205, 304;** within the subsequent period **200,** then a timer **305** is started.
2. If a call progress signalling event is received indicating that the call has been answered **306** within the subsequent period **201** defined by a configurable threshold **206** a determination is made **307** that the call has been answered by a machine **308.**
3. If a call progress signalling event is received indicating that the call has been answered **306** in the subsequent period **202** (i.e. after expiry of the time period) then a determination is made **307** that the call has been answered by a live person **309.**

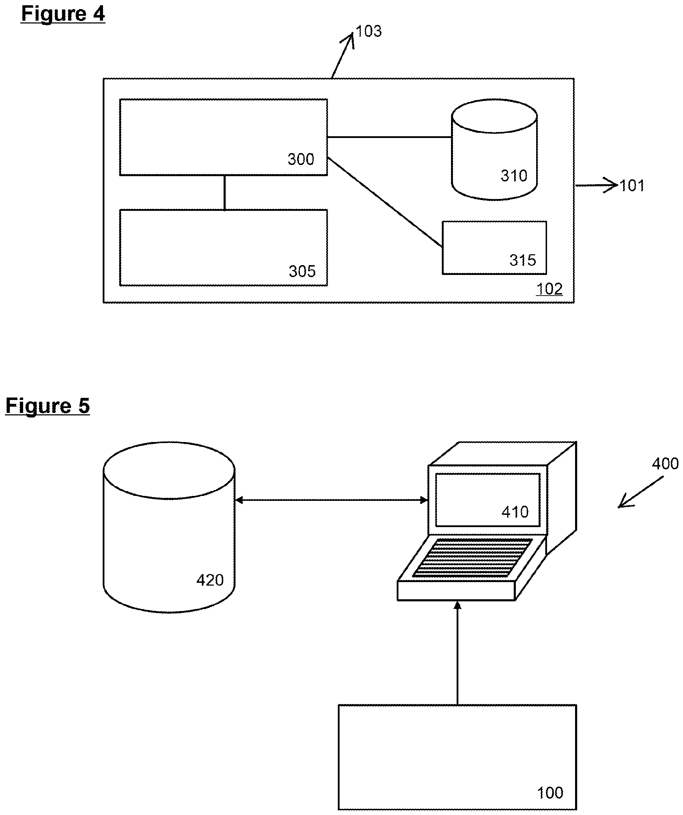

Figure 4 shows a schematic diagram of the automated calling equipment of figure 1 shown in more detail. This automated calling equipment implements the various methods described throughout this disclosure.

A processor **300** carries out logic to implement the methods. Persistent storage or database **310** may be used to store processing instructions, computer programs, an operating system (e.g. Windows, Linux, OSX, UNIX, etc.), parameters (e.g. timing thresholds and other configurable variables) and historic data of previous telephone calls. The automated calling equipment **102** also contains memory **305** (e.g. RAM) and a telephone interface **315.**

Figure 5 shows a schematic diagram of a system **400** for processing telephone call data. Processor or server **410** runs a suitable operating system (e.g. Windows, UNIX, OSX, Linux or similar). Database **420** may be internal or external to the computer system **410** and stores the historic telephone call data. The telephone data is provided to the system **400** from the call centre operation **100** either directly or indirectly over a network or other suitable medium.

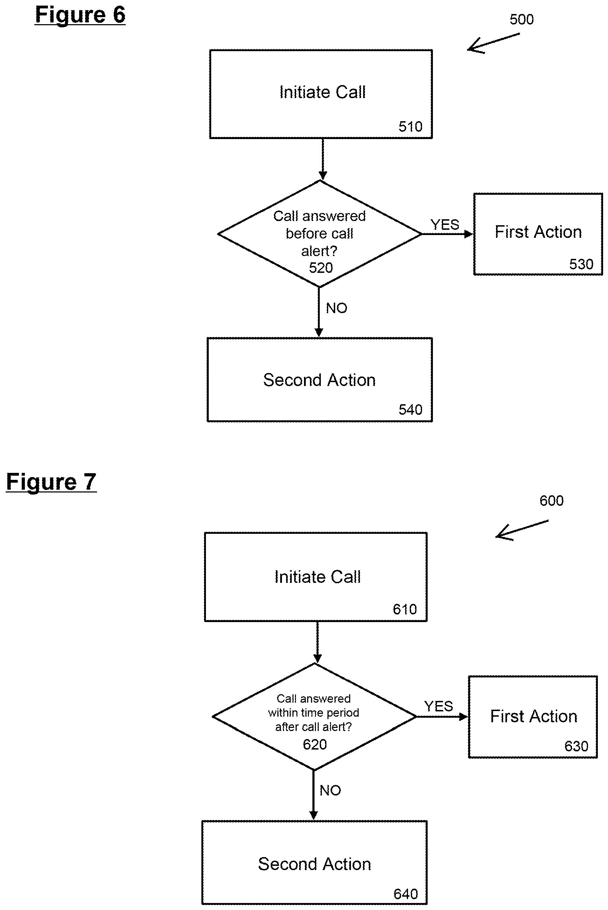

Figure 6 illustrates a flowchart of a method **500** for processing a telephone call. A call is initiated at step **510.** At step **520,** it is determined whether or not the telephone call was answered before the call alert. If it was answered beforehand, then a first action **530** is taken. If it was not answered beforehand, then a second action **540** is taken. The first action **530** may be for example to terminate the call or apply further tests and criteria. The second action **540** may be to allow the call to proceed.

Figure 7 illustrates a flowchart of an alternative method **600** of processing a telephone call. Again, a telephone call is initiated at step **610.** At step **620,** it is determined whether or not the call was answered within a time period following the call alert. If the call is answered within this time period, then the first action **630** is taken. If the call was not answered within this time period (i.e. later) then the second action **640** is taken. Again, the first action **530** may be for example to terminate the call or apply further tests and criteria. The second action **540** may be to allow the call to proceed.

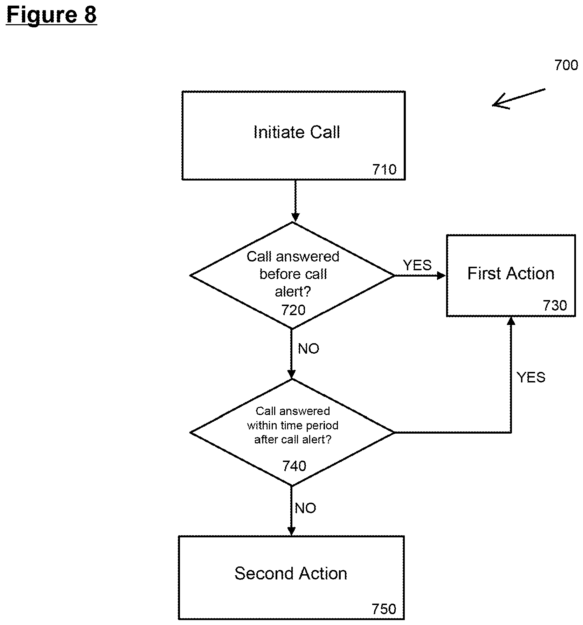

Figure 8 shows a flowchart of a further method **700** for processing a telephone call. In essence, this method **700** is a combination of methods **500** and **600.**

At step **710,** the call is initiated. Step **720** is to determine whether or not the call was answered before the call alert. If yes, then the first action **730** is taken. If no then a further determination is made. This further determination is whether or not the call was answered within a time period following the call alert. If yes, then the first action **730** is taken and if no, then the second action **750** is taken. Again, the first action **530** may be for example to terminate the call or apply further tests and criteria. The second action **540** may be to allow the call to proceed.

As will be appreciated by the skilled person, details of the above embodiment may be varied without departing from the scope of the present invention, as defined by the appended claims.

For example, the method is described as being carried out with a call centre but this may instead be carried out elsewhere (e.g. by domestic users). The telephone systems described are fixed line telephone systems. However, the system and method may also be implemented in a mobile or cellular environment.

Many combinations, modifications, or alterations to the features of the above embodiments will be readily apparent to the skilled person and are intended to form part of the invention. Any of the features described specifically relating to one embodiment or example may be used in any other embodiment by making the appropriate changes.

## Claims

1. A method of processing a telephone call comprising the steps of:
initiating a telephone call by an automated calling system (102);
taking a first action by the automated calling system (102) if the telephone call is answered before a signal indicating a call alert is initiated; and
taking a second action by the automated calling system (102) if the telephone call is answered after the signal indicating the call alert is initiated, wherein:
the first action is terminating the call and the second action is allowing the call to proceed, or
the first action is determining that the call has been answered by a non-human and the second action is determining that the call has been answered by a human.

2. A method of processing a telephone call comprising the steps of:
initiating a telephone call by an automated calling system (102);
taking a first action by the automated calling system (102) if the telephone call is answered within a time period following a signal indicating a call alert being initiated; and
taking a second action by the automated calling system (102) if the telephone call is answered after expiry of the time period following the signal indicating the call alert being initiated, wherein:
the first action is terminating the call and the second action is allowing the call to proceed, or
the first action is determining that the call has been answered by a non-human and the second action is determining that the call has been answered by a human.

3. The method of claim 1 or claim 2, wherein the non-human is an answering machine, voicemail, digital assistant, artificial intelligence, a computer, machine, or an interactive voice response, IVR, processor.

4. The method according to any previous claim further comprising the step of receiving the signal indicating that the call alert has been sent.

5. The method according to any previous claim further comprising the steps of:
receiving a signal indicating that the call has been set up; and
receiving a signal indicating that the call is proceeding.

6. The method according to any previous claim, wherein the signal indicating the call alert is a ringing telephone or early media signalling.

7. The method according to any previous claim further comprising the steps of determining that the telephone call has been answered, and determining that the call alert is initiated, based on call progress signalling events.

8. The method according to any previous claim, wherein the first action is to allow the call to proceed provided one or more criteria are met.

9. The method of claim 8, wherein the one or more criteria are any one or more of:
determining that a previous telephone call to the same number or recipient was successful;
determining that the telephone call is the first time that the telephone number or recipient has been called;
determining that a previous telephone call to the same number or recipient exceeded a predetermined time; and/or
determining that a previous telephone call to the same number or recipient was connected to an IVR processor.

10. The method according to any previous claim wherein the telephone call is initiated using voice over session initiation protocol, SIP, IP, VoIP, integrated services digital network, ISDN protocols, or primary rate interface, PRI.

11. An automated calling system comprising a processor (300) configured to:
initiate a telephone call;
take a first action if the telephone call is answered before a signal indicating a call alert is initiated; and
take a second action if the telephone call is answered after the signal indicating the call alert is initiated, wherein:
the first action is terminating the call and the second action is allowing the call to proceed, or
the first action is determining that the call has been answered by a non-human and the second action is determining that the call has been answered by a human.

12. An automated calling system comprising a processor (300) configured to:
initiate a telephone call;
take a first action if the telephone call is answered within a time period following a signal indicating a call alert being initiated; and
take a second action if the telephone call is answered after expiry of the time period following the signal indicating the call alert being initiated, wherein:
the first action is terminating the call and the second action is allowing the call to proceed, or
the first action is determining that the call has been answered by a non-human and the second action is determining that the call has been answered by a human.

13. The system of claim 11 or claim 12 further comprising a telephone interface configured to initiate the telephone call.

14. A call centre comprising the system according to any of claims 11 to 13.

15. A computer program comprising program instructions that, when executed on a computer cause the computer to perform the method of any of claims 1 to 10.

## Patentansprüche

1. Verfahren zum Verarbeiten eines Telefonanrufs, mit den Schritten:
Einleiten eines Telefonanrufs durch ein automatisiertes Rufsystem (102);
Ausführen einer ersten Aktion durch das automatisierte Rufsystem (102), wenn der Telefonanruf angenommen wird, bevor ein Signal, das ein Rufzeichen anzeigt, eingeleitet wird; und
Ausführen einer zweiten Aktion durch das automatisierte Rufsystem (102), wenn der Telefonanruf angenommen wird, nachdem das Signal, das das Rufzeichen anzeigt, eingeleitet wurde, wobei:
die erste Aktion das Beenden des Anrufs ist und die zweite Aktion das Ermöglichen des Fortfahrens des Anrufs ist, oder
die erste Aktion das Bestimmen ist, dass der Anruf von einem Nicht-Menschen angenommen wurde, und die zweite Aktion das Bestimmen ist, dass der Anruf von einem Menschen angenommen wurde.

2. Verfahren zum Verarbeiten eines Telefonanrufs, mit den Schritten:
Einleiten eines Telefonanrufs durch ein automatisiertes Rufsystem (102);
Ausführen einer ersten Aktion durch das automatisierte Rufsystem (102), wenn der Telefonanruf innerhalb einer Zeitspanne angenommen wird, die auf ein Signal folgt, das anzeigt, dass ein Rufzeichen eingeleitet wird; und
Ausführen einer zweiten Aktion durch das automatisierte Rufsystem (102), wenn der Telefonanruf nach Ablauf der Zeitspanne nach dem Signal, das anzeigt, dass ein Rufzeichen eingeleitet wird, angenommen wird, wobei:
die erste Aktion das Beenden des Anrufs ist und die zweite Aktion das Ermöglichen des Fortfahrens des Anrufs ist, oder
die erste Aktion das Bestimmen ist, dass der Anruf von einem Nicht-Menschen angenommen wurde, und die zweite Aktion das Bestimmen ist, dass der Anruf von einem Menschen angenommen wurde.

3. Verfahren nach Anspruch 1 oder Anspruch 2, bei dem der Nichtmensch ein Anrufbeantworter, eine Voicemail, ein digitaler Assistent, eine künstliche Intelligenz, ein Computer, eine Maschine oder ein interaktiver Sprachausgabe-(IVR)-Prozessor ist.

4. Verfahren nach einem früheren Anspruch, ferner umfassend den Schritt des Empfangens des Signals, das anzeigt, dass das Rufzeichen gesendet wurde.

5. Verfahren nach einem der vorhergehenden Ansprüche, ferner umfassend die Schritte:
Empfangen eines Signals, das anzeigt, dass der Anruf eingerichtet wurde; und
Empfangen eines Signals, das anzeigt, dass der Anruf fortgesetzt wird.

6. Verfahren nach einem der vorhergehenden Ansprüche, bei dem das das Rufzeichen anzeigende Signal ein klingelndes Telefon oder eine frühe Mediensignalisierung ist.

7. Verfahren nach einem der vorhergehenden Ansprüche, ferner umfassend die Schritte des Bestimmens, dass der Telefonanruf angenommen wurde, und des Bestimmens, dass das Rufzeichen ausgelöst wird, basierend auf Ereignissen, die den Anrufverlauf signalisieren.

8. Verfahren nach einem früheren Anspruch, wobei die erste Maßnahme darin besteht, den Aufruf fortzusetzen, vorausgesetzt, dass ein oder mehrere Kriterien erfüllt sind.

9. Verfahren nach Anspruch 8, bei dem das eine oder die mehreren Kriterien eines oder mehrere der folgenden sind:
Bestimmen, ob ein vorheriger Telefonanruf an dieselbe Nummer oder denselben Empfänger erfolgreich war;
Bestimmen, dass der Telefonanruf das erste Mal ist, dass die Telefonnummer oder der Empfänger angerufen wurde;
Bestimmen, dass ein vorheriger Telefonanruf an dieselbe Nummer oder denselben Empfänger eine vorbestimmte Zeit überschritten hat; und/oder
Bestimmen, dass ein vorheriger Telefonanruf an dieselbe Nummer oder denselben Empfänger mit einem IVR-Prozessor verbunden war.

10. Verfahren nach einem früheren Anspruch, bei dem der Telefonanruf unter Verwendung des Voice-over-Session-Initiierungsprotokolls, von SIP, IP, VoIP, eines digitalen Netzwerks integrierter Dienste, von ISDN-Protokollen oder einer Primärratenschnittstelle PRI eingeleitet wird.

11. Automatisches Rufsystem, umfassend einen Prozessor (300), der konfiguriert ist, um:
einen Telefonanruf einzuleiten;
eine erste Aktion durchzuführen, wenn der Telefonanruf angenommen wird, bevor ein Signal, das ein Rufzeichen anzeigt, eingeleitet wird; und
eine zweite Aktion durchzuführen, wenn der Telefonanruf angenommen wird, nachdem das Signal, das das Rufzeichen anzeigt, eingeleitet wurde, wobei:
die erste Aktion das Beenden des Anrufs ist und die zweite Aktion das Ermöglichen des Fortfahrens des Anrufs ist, oder
die erste Aktion das Bestimmen ist, dass der Anruf von einem Nicht-Menschen angenommen wurde, und die zweite Aktion das Bestimmen ist, dass der Anruf von einem Menschen angenommen wurde.

12. Automatisches Rufsystem, umfassend einen Prozessor (300), der konfiguriert ist, um:
einen Telefonanruf einzuleiten;
eine erste Aktion auszuführen, wenn der Telefonanruf innerhalb einer Zeitspanne angenommen wird, die auf ein Signal folgt, das anzeigt, dass ein Rufzeichen eingeleitet wird; und
eine zweite Aktion auszuführen, wenn der Telefonanruf nach Ablauf der Zeitspanne nach dem Signal, das anzeigt, dass ein Rufzeichen eingeleitet wird, angenommen wird, wobei:
die erste Aktion das Beenden des Anrufs ist und die zweite Aktion das Ermöglichen des Fortfahrens des Anrufs ist, oder
die erste Aktion das Bestimmen ist, dass der Anruf von einem Nicht-Menschen angenommen wurde, und die zweite Aktion das Bestimmen ist, dass der Anruf von einem Menschen angenommen wurde.

13. System nach Anspruch 11 oder Anspruch 12, ferner umfassend eine Telefonschnittstelle, die konfiguriert ist, um den Telefonanruf einzuleiten.

14. Callcenter, umfassend das System nach einem der Ansprüche 11 bis 13.

15. Computerprogramm, umfassend Programmanweisungen, die, wenn sie auf einem Computer ausgeführt werden, den Computer veranlassen, das Verfahren nach einem der Ansprüche 1 bis 10 durchzuführen.

## Revendications

1. Procédé de traitement d'un appel téléphonique comprenant les étapes ci-dessous consistant à :
initier un appel téléphonique par le biais d'un système d'appel automatisé (102) ;
effectuer une première action, par le biais du système d'appel automatisé (102), s'il a été répondu à l'appel téléphonique avant qu'un signal indiquant une alerte d'appel ne soit initié ; et
effectuer une seconde action, par le biais du système d'appel automatisé (102), s'il a été répondu à l'appel téléphonique après que le signal indiquant l'alerte d'appel a été initié, dans lequel :
la première action consiste à mettre fin à l'appel et la seconde action consiste à permettre à l'appel de se poursuivre ; ou
la première action consiste à déterminer qu'une entité non humaine a répondu à l'appel et la seconde action consiste à déterminer qu'un humain a répondu à l'appel.

2. Procédé de traitement d'un appel téléphonique comprenant les étapes ci-dessous consistant à :
initier un appel téléphonique par le biais d'un système d'appel automatisé (102) ;
effectuer une première action, par le biais du système d'appel automatisé (102), s'il a été répondu à l'appel téléphonique au cours d'une période de temps suivant un signal indiquant qu'une alerte d'appel est initiée ; et
effectuer une seconde action, par le biais du système d'appel automatisé (102), s'il a été répondu à l'appel téléphonique après l'expiration de la période de temps suivant le signal indiquant que l'alerte d'appel est initiée, dans lequel :
la première action consiste à mettre fin à l'appel et la seconde action consiste à permettre à l'appel de se poursuivre ; ou
la première action consiste à déterminer qu'une entité non humaine a répondu à l'appel et la seconde action consiste à déterminer qu'un humain a répondu à l'appel.

3. Procédé selon la revendication 1 ou 2, dans lequel l'entité non humaine est un répondeur, une messagerie vocale, un assistant numérique, une intelligence artificielle, un ordinateur, une machine, ou un processeur de réponse vocale interactive, IVR.

4. Procédé selon l'une quelconque des revendications précédentes comprenant en outre l'étape consistant à recevoir le signal indiquant que l'alerte d'appel a été envoyée.

5. Procédé selon l'une quelconque des revendications précédentes comprenant en outre les étapes ci-dessous consistant à :
recevoir un signal indiquant que l'appel a été établi ; et
recevoir un signal indiquant que l'appel est en cours.

6. Procédé selon l'une quelconque des revendications précédentes, dans lequel le signal indiquant l'alerte d'appel est une sonnerie de téléphone ou une signalisation de contenu multimédia précoce.

7. Procédé selon l'une quelconque des revendications précédentes comprenant en outre les étapes consistant à déterminer qu'il a été répondu à l'appel téléphonique, et à déterminer que l'alerte d'appel est initiée, sur la base d'événements de signalisation de progression d'appel.

8. Procédé selon l'une quelconque des revendications précédentes, dans lequel la première action consiste à permettre à l'appel de se poursuivre à condition qu'un ou plusieurs critères soient satisfaits.

9. Procédé selon la revendication 8, dans lequel ledit un ou lesdits plusieurs critères correspondent à l'un quelconque ou plusieurs des critères suivants consistant à :
déterminer qu'un appel téléphonique antérieur, au même numéro ou au même destinataire, a réussi ;
déterminer que l'appel téléphonique correspond à un tout premier appel au numéro de téléphone ou au destinataire ;
déterminer que la durée d'un appel téléphonique antérieur au même numéro ou au même destinataire a dépassé un temps prédéterminé ; et/ou
déterminer qu'un appel téléphonique antérieur au même numéro ou au même destinataire a été connecté à un processeur de réponse IVR.

10. Procédé selon l'une quelconque des revendications précédentes dans lequel l'appel téléphonique est initié en utilisant un protocole d'ouverture de session vocale, SIP, un protocole IP, un protocole VoIP, un réseau numérique à intégration de services, des protocoles ISDN, ou une interface à débit primaire, PRI.

11. Système d'appel automatisé comprenant un processeur (300) configuré de manière à :
initier un appel téléphonique ;
effectuer une première action s'il a été répondu à l'appel téléphonique avant qu'un signal indiquant une alerte d'appel ne soit initié ; et
effectuer une seconde action s'il a été répondu à l'appel téléphonique après que le signal indiquant l'alerte d'appel a été initié, dans lequel :
la première action consiste à mettre fin à l'appel et la seconde action consiste à permettre à l'appel de se poursuivre ; ou
la première action consiste à déterminer qu'une entité non humaine a répondu à l'appel et la seconde action consiste à déterminer qu'un humain a répondu à l'appel.

12. Système d'appel automatisé comprenant un processeur (300) configuré de manière à :
initier un appel téléphonique ;
effectuer une première action s'il a été répondu à l'appel téléphonique au cours d'une période de temps suivant un signal indiquant qu'une alerte d'appel est initiée ; et
effectuer une seconde action s'il a été répondu à l'appel téléphonique après l'expiration de la période de temps suivant le signal indiquant que l'alerte d'appel est initiée, dans lequel :
la première action consiste à mettre fin à l'appel et la seconde action consiste à permettre à l'appel de se poursuivre ; ou
la première action consiste à déterminer qu'une entité non humaine a répondu à l'appel et la seconde action consiste à déterminer qu'un humain a répondu à l'appel.

13. Système selon la revendication 11 ou 12, comprenant en outre une interface téléphonique configurée de manière à initier l'appel téléphonique.

14. Centre d'appel comprenant le système selon l'une quelconque des revendications 11 à 13.

15. Programme informatique comprenant des instructions de programme qui, lorsqu'elles sont exécutées sur un ordinateur, amènent l'ordinateur à mettre en oeuvre le procédé selon l'une quelconque des revendications 1 à 10.
